# EUROPEAN PATENT APPLICATION

(11) **EP 3 133 274 A1**
(43) Date of publication of application: **22.02.2017**
(21) Application number: 16184611.8
(22) Date of filing: 17.08.2016
(51) Int. Cl.: F02D 41/00, F02D 41/14, F02D 35/02, F02D 13/02

(54) **MODULATED VALVE TIMING TO ACHIEVE OPTIMUM CYLINDER PRESSURE TARGET**

(30) Priority: 17.08.2015 US 201562206048 P
(71) Applicant: Cummins, Inc., Columbus, Indiana 47201 (US)
(72) Inventor: Shipp, Timothy, Seymour, IN Indiana 47274 (US)
(74) Representative: Tevlin, Christopher Michael

(57) **Abstract**

A system includes an engine and a controller in operative communication with the engine. Engine operating conditions are determined. At least one engine operating condition is determined. Based on the determined at least one engine operating condition, brake-specific fuel consumption is determined for each of a plurality of candidate cylinder pressures. A target cylinder pressure is selected from the plurality of candidate cylinder pressures. The target cylinder pressure is the candidate cylinder pressure at which brake-specific fuel consumption is minimized. Intake valve timing of the engine is modulated so as to achieve the target cylinder pressure.

## Description

### CROSS-REFERENCE TO RELATED APPLICATIONS

This application claims the benefit of and priority to U.S. Provisional Patent Application 62/206,048 filed August 17, 2015 to Shipp, titled "Mounted Valve Timing to Achieve Optimum cylinder Pressure Target," the contents of which are incorporated herein by reference in their entirety.

### TECHNICAL FIELD

The present disclosure relates generally to systems and methods for operating engines.

### BACKGROUND

Valves within an internal combustion engine operate to control the flow of intake and exhaust gases into and out of the combustion chamber. The timing, duration, and lift of valve events has a significant impact on engine performance. Variable valve actuation (VVA) refers to controlling the timing of valve actuation (e.g., lift) events. Several VVA control strategies include controlling intake valve closing (IVC) or intake valve opening (IVO). For example, early intake valve closing (EIVC) refers to closing the intake valve before the intake stroke is completed. Late intake valve closing (LIVC) refers to leaving the intake valve open through the entire intake stroke and closing the intake valve after a first part of the compression stroke.

### SUMMARY

Various embodiments relate to systems and methods for modulating intake valve timing to achieve an optimal cylinder pressure of an engine. An example system comprises an engine and a controller in operative communication with the engine. The controller is structured or configured to determine at least one engine operating condition. The controller is structured or configured to, based on the determined at least one engine operating condition, determine brake-specific fuel consumption (BSFC) for each of a plurality of candidate cylinder pressures. The controller is structured or configured to select a target cylinder pressure from the plurality of candidate cylinder pressures. The target cylinder pressure is the candidate cylinder pressure at which BSFC is minimized. The controller is structured or configured to modulate intake valve timing of the engine so as to achieve the target cylinder pressure.

The controller may be structured or configured to modulate the intake valve timing so as to achieve the target cylinder pressure when the engine is operating at partial load.

Determining brake-specific fuel consumption may include analyzing both gains and reductions in brake-specific fuel consumption due to higher cylinder pressures. Gains in brake-specific fuel consumption due to higher cylinder pressures may relate to decreased mechanical efficiency due to increased piston ring loading against cylinder walls of the engine. Additionally or alternatively, gains in brake-specific fuel consumption due to higher cylinder pressures may relate to decreased closed cycle efficiency due to effective expansion ratio efficiency losses. Additionally or alternatively, gains in brake-specific fuel consumption due to higher cylinder pressures may relate to decreased open cycle efficiency due to volumetric efficiency losses.

The engine operating conditions may include at least one of intake valve closing, start of injection charge flow, and exhaust gas recirculation fraction.

The controller may be further structured or configured to modulate at least one of intake valve closing, start of injection charge flow, and exhaust gas recirculation fraction so as to achieve the target cylinder pressure.

Another example embodiment relates to a method comprising determining at least one engine operating condition of an engine. The method further comprises determining brake-specific fuel consumption for each of a plurality of candidate cylinder pressures based on the determined at least one engine operating condition. The method further comprises selecting a target cylinder pressure from the candidate cylinder pressures. The target cylinder pressure is the candidate cylinder pressure at which brake-specific fuel consumption is minimized. The method further comprises modulating intake valve timing of the engine so as to achieve the target cylinder pressure. Each of the steps of the method may be performed by a processor.

The intake valve timing may be modulated so as to achieve the target cylinder pressure when the engine is operating at partial load.

The determining brake-specific fuel consumption may include analyzing both gains and reductions in brake-specific fuel consumption due to higher cylinder pressures. Gains in brake-specific fuel consumption due to higher cylinder pressures may relate to decreased mechanical efficiency due to increased piston ring loading against cylinder walls of the engine. Additionally or alternatively, gains in brake-specific fuel consumption due to higher cylinder pressures may relate to decreased closed cycle efficiency due to effective expansion ratio efficiency losses. Additionally or alternatively, gains in brake-specific fuel consumption due to higher cylinder pressures may relate to decreased open cycle efficiency due to volumetric efficiency losses.

The engine operating conditions may include at least one of intake valve closing, start of injection charge flow, and exhaust gas recirculation fraction.

The method may further comprise modulating, by the processor, at least one of intake valve closing, start of injection charge flow, and exhaust gas recirculation fraction so as to achieve the target cylinder pressure.

Another example embodiment relates to a controller operatively coupled to an engine. The controller comprises a mechanical efficiency analysis circuit structured to determine gains in brake-specific fuel consumption for each of a plurality of candidate cylinder pressures due to increased piston ring loading against cylinder walls of the engine. The controller comprises a closed cycle efficiency analysis circuit structured to determine gains in brake-specific fuel consumption for each of the plurality of candidate cylinder pressures due to effective expansion ratio efficiency losses. The controller comprises an open cycle efficiency management circuit structured to determine gains in brake-specific fuel consumption for each of the plurality of candidate cylinder pressures due to volumetric efficiency losses. The controller comprises a target cylinder pressure circuit structured to determine a target cylinder pressure from the plurality of candidate cylinder pressures. The target cylinder pressure is the candidate cylinder pressure at which brake-specific fuel consumption is minimized. The controller is structured or configured to modulate intake valve timing of the engine so as to achieve the target cylinder pressure.

The controller may be structured or configured to modulate the intake valve timing so as to achieve the target cylinder pressure when the engine is operating at partial load. Determining brake-specific fuel consumption may include analyzing both gains and reductions in brake-specific fuel consumption due to higher cylinder pressures.

The controller may be further structured or configured to modulate at least one of intake valve closing, start of injection charge flow, and exhaust gas recirculation fraction so as to achieve the target cylinder pressure.

These and other features, together with the organization and manner of operation thereof, will become apparent from the following detailed description when taken in conjunction with the accompanying drawings, wherein like elements have like numerals throughout the several drawings described below.

### BRIEF DESCRIPTION OF THE DRAWINGS

The details of one or more implementations are set forth in the accompanying drawings and the description below. Other features, aspects, and advantages of the disclosure will become apparent from the description, the drawings, and the claims.
Fig. 1 is a block diagram of a cylinder pressure controller, according to an embodiment.
Fig. 2 is a flow diagram of a method of controlling engine cylinder pressure, according to an embodiment.

It will be recognized that some or all of the figures are schematic representations for purposes of illustration. The figures are provided for the purpose of illustrating one or more implementations with the explicit understanding that they will not be used to limit the scope or the meaning of the claims.

### DETAILED DESCRIPTION

Following below are more detailed descriptions of various concepts related to, and implementations of, methods, apparatuses, and systems for modulating intake valve timing to achieve optimum engine cylinder pressure. The various concepts introduced above and discussed in greater detail below may be implemented in any of numerous ways, as the described concepts are not limited to any particular manner of implementation. Examples of specific implementations and applications are provided primarily for illustrative purposes.

One way to implement VVA is by utilizing Miller cycle-based controls. The Miller cycle is a thermodynamic cycle that utilizes LIVC, in which the intake valve is left open through a first part of the compression stroke. As the piston moves upward during the first part of the compression stroke, the charge is partially expelled through the open intake valve and into the intake manifold. This reduces the effective compression ratio because compression does not begin until part-way through the compression stroke when the valve closes. Conventionally, VVA events, such as EIVC and LIVC, are used to keep the peak cylinder pressure from exceeding mechanical limits when the engine is operating on the torque curve, or in other words, at maximum load.

Various embodiments relate to dynamically modulating intake valve timing to control cylinder pressure at an optimized target level. Controlling cylinder pressure at the optimized target level enables the engine to operate at higher peak cylinder pressures at partial loads, which improves BSFC and reduces emissions. Accordingly, various embodiments utilize enhanced control functionality, in addition to Miller cycle-based controls, to enable engines to run at peak efficiency, even when operating at partial loads. For purposes of clarity and consistency, engine efficiency is described herein in terms of BSFC, which is a measure of the fuel efficiency of an engine. In general, the lower the BSFC, the better. However, it should be noted that engine efficiency may also be expressed in other ways, such as brake thermal efficiency.

According to an embodiment, various engine operating conditions, such as IVC, start of injection (SOI), charge flow, and exhaust gas recirculation (EGR) fraction are determined. Based on the determined engine operating conditions, BSFC for each of a plurality of candidate cylinder pressures is determined. A target cylinder pressure is selected at which, based on the operating conditions, BSFC is minimized. More specifically, the target cylinder pressure is determined by optimizing reductions in BSFC due to higher cylinder pressures with corresponding gains in BSFC due to the higher cylinder pressures. Those tradeoffs are balanced to determine the optimum cylinder pressure for the operating conditions. Gains in BSFC due to the higher cylinder pressures may result from decreased mechanical efficiency due to increased piston ring loading against cylinder walls of the engine, decreased closed cycle efficiency due to effective expansion ratio efficiency losses, and decreased open cycle efficiency due to volumetric efficiency losses. Intake valve timing is then modulated to achieve the target cylinder pressure. In some embodiments, at least one of IVC, SOI, charge flow, and EGR fraction are also modulated to achieve the target cylinder pressure. Accordingly, instead of simply utilizing VVA events to prevent the peak cylinder pressure from exceeding mechanical limits at maximum load, embodiments described herein are directed to control systems structured to maintain cylinder pressure at an optimum target pressure at any load. For example, embodiments described herein include control systems structured to increase or decrease cylinder pressure, depending on operating conditions, to maintain the cylinder pressure at the optimum target pressure level.

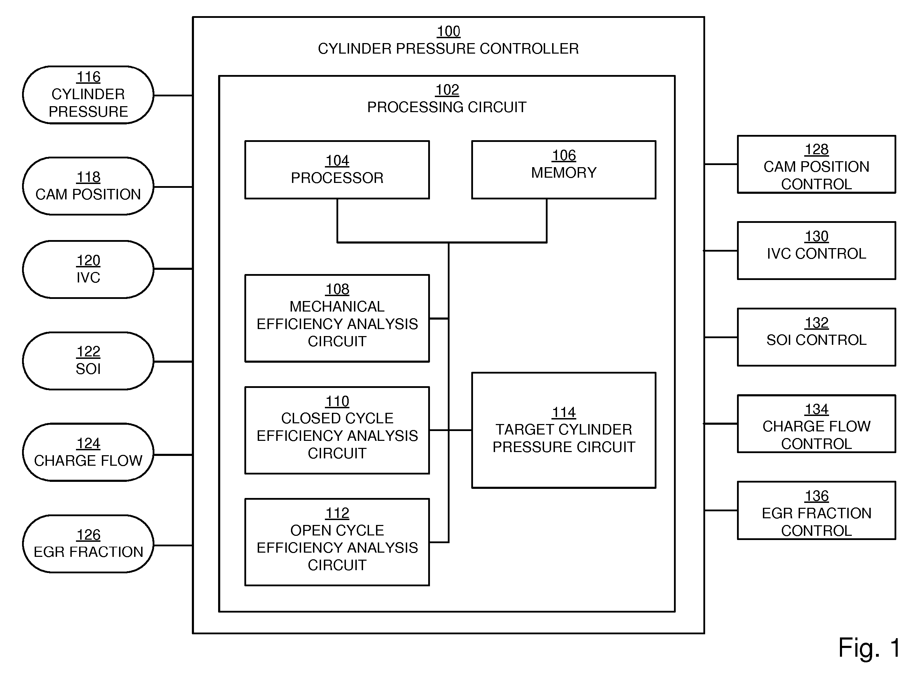

Fig. 1 is a block diagram of a cylinder pressure controller 100, according to an embodiment. The cylinder pressure controller 100 is operatively and communicably coupled to an engine system of a vehicle (not shown). Communication between and among the components may be via any number of wired or wireless connections. For example, a wired connection may include a serial cable, a fiber optic cable, a CAT5 cable, or any other form of wired connection. In comparison, a wireless connection may include the Internet, Wi-Fi, cellular, radio, etc. In one embodiment, a controller area network ("CAN") bus provides the exchange of signals, information, and/or data. The CAN bus includes any number of wired and wireless connections. Because the cylinder pressure controller 100 is communicably coupled to the engine system, the cylinder pressure controller 100 is structured to receive operating data from the engine system. The engine operating data may be received via one or more sensors (e.g., cylinder pressure sensors, cam position sensors, etc.) attached to the engine. As described more fully herein, the cylinder pressure controller 100 can acquire this data to dynamically modulate the cylinder pressure of the engine to substantially achieve various operating characteristics of one or more vehicle operating parameters.

As illustrated in Fig. 1, the cylinder pressure controller 100 includes a processing circuit 102, including a processor 104 and one or more memory 106. The processor 104 may be implemented as a general-purpose processor, an application specific integrated circuit (ASIC), one or more field programmable gate arrays (FPGAs), a digital signal processor (DSP), a group of processing components, or other suitable electronic processing components. The one or more memory devices 106 (e.g., RAM, ROM, Flash Memory, hard disk storage, etc.) may store data and/or computer code for facilitating the various processes described herein. Thus, the one or more memory devices 106 may be communicably connected to the processor 104 and provide computer code or instructions to the processor 104 for executing the processes described in regard to the cylinder pressure controller 100 herein. Moreover, the one or more memory devices 106 may be or include tangible, non-transient volatile memory or non-volatile memory. Accordingly, the one or more memory devices 106 may include database components, object code components, script components, or any other type of information structure for supporting the various activities and information structures described herein.

The controller 100 is shown to include various circuits for completing the activities described herein. In one embodiment, the circuits of the controller 100 may utilize the processor 104 and/or memory 106 to accomplish, perform, or otherwise implement various actions described herein with respect to each particular circuit. In this embodiment, the processor 104 and/or memory 106 may be considered to be shared components across each circuit. In another embodiment, the circuits (or at least one of the circuits) may include their own dedicated processing circuit having a processor and a memory device. In this latter embodiment, the circuit may be structured as an integrated circuit or an otherwise integrated processing component. In yet another embodiment, the activities and functionalities of circuits may be embodied in the memory 106, or combined in multiple circuits, or as a single circuit. In this regard and while various circuits with particular functionality are shown in Fig. 1, it should be understood that the controller 100 may include any number of circuits for completing the functions and activities described herein. For example, the activities of multiple circuits may be combined as a single circuit, as an additional circuit(s) with additional functionality, etc. Further, it should be understood that the controller 100 may further control other activity beyond the scope of the present disclosure. For example, the controller 100 may be implemented in an engine control module (ECM) or engine control unit (ECU) that controls various aspects of engine and vehicle operation.

In an embodiment, as illustrated in Fig. 1, the controller 100 includes a mechanical efficiency analysis module or circuit 108, a closed cycle efficiency analysis module or circuit 110, an open cycle efficiency analysis module or circuit 112, and a target cylinder pressure module or circuit 114. The mechanical efficiency analysis circuit is structured to determine, based on the engine operating conditions, a mechanical efficiency of the engine for each of multiple candidate cylinder pressures. The closed cycle efficiency analysis circuit 110 is structured to determine, based on the engine operating conditions, a closed cycle efficiency of the engine for each of the candidate cylinder pressures. The open cycle efficiency analysis circuit 112 is structured to determine, based on the engine operating conditions, an open cycle efficiency of the engine for each of the candidate cylinder pressures.

The target cylinder pressure circuit 114, in connection with each of the mechanical efficiency analysis circuit 108, the closed cycle efficiency analysis circuit 110, and the open cycle efficiency analysis circuit 112, is structured to determine a target cylinder pressure at which, based on engine operating conditions, BSFC is minimized. Determining the target cylinder pressure at which BSFC is minimized involves balancing reductions in BSFC at higher pressures with corresponding gains in BSFC at the higher pressures due to reductions in at least one of mechanical efficiency, closed cycle efficiency, and open cycle efficiency.

Certain operations of the cylinder pressure controller 100 described herein include operations to interpret and/or to determine one or more parameters. Interpreting or determining, as utilized herein, includes receiving values by any technique known in the art, including at least receiving values from a datalink or network communication, receiving an electronic signal (e.g. a voltage, frequency, current, or PWM signal) indicative of the value, receiving a computer generated parameter indicative of the value, reading the value from a memory location on a non-transient computer readable storage medium, receiving the value as a run-time parameter by any means known in the art, and/or by receiving a value by which the interpreted parameter can be calculated, and/or by referencing a default value that is interpreted to be the parameter value.

According to various embodiments, the cylinder pressure controller 100 is structured to receive various input parameters, such as cylinder pressure 116, cam position 118, IVC 120, SOI 122, charge flow 124, and EGR fraction 126. The cylinder pressure controller 100 is structured to determine values of the input parameters via operative communication with one or more sensors. For example, in one embodiment, the cylinder pressure controller 100 is structured to determine a value of the cylinder pressure 116 via operative communication with a cylinder pressure sensor. In some embodiments, the cylinder pressure controller 100 may utilize model-based control parameters in addition to or instead of the input parameters illustrated in Fig. 1.

The mechanical efficiency analysis circuit 108 is structured to analyze the effects of cylinder pressure on the mechanical efficiency of the engine. In general, as cylinder pressure increases, friction between the piston ring and the cylinder wall also increases. Therefore, the mechanical efficiency of the engine generally decreases as cylinder pressure increases. However, the relationship between mechanical efficiency and cylinder pressure may also depend on various other factors, such as the engine operating conditions. Accordingly, the mechanical efficiency analysis circuit 108 is structured to dynamically analyze mechanical efficiency depending on the engine operating conditions.

The closed cycle efficiency analysis circuit 110 is structured to analyze the effects of cylinder pressure on the closed cycle efficiency of the engine. Closed cycle efficiency may be influenced by the effective expansion ratio of the engine. In general, engines have geometric compression and expansion ratios and effective compression and expansion ratios. Geometric compression and expansion ratios are defined by the cylinder clearance volume above the piston at bottom dead center (BDC) divided by the cylinder clearance volume above the piston at top dead center (TDC). The geometric compression ratio and the geometric expansion ratio of an engine are the same. However, the effective compression and expansion ratios of an engine may vary depending on certain factors, such as intake and exhaust valve events. For example, the effective compression ratio can be different from the effective expansion ratio by controlling valve timing events. For example, Miller cycle engines may have a higher effective expansion ratio than compression ratio due to LIVC.

The open cycle efficiency analysis circuit 112 is structured to analyze the effects of cylinder pressure on the open cycle efficiency of the engine. Open cycle efficiency may be influenced by the volumetric efficiency of the engine, which may vary depending on charge flow and/or EGR fraction, among other factors. Volumetric efficiency refers to the relationship between the actual air charge trapped inside the cylinder and the theoretical air charge governed by the cylinder capacity under standard conditions (e.g., *p₀* = 1.013 kPa, temperature To = 273 K) without EGR operation, turbocharging, or supercharging.

The target cylinder pressure circuit 114 is structured to determine the target cylinder pressure at which, based on the engine operating conditions, BSFC is minimized by optimizing reductions in BSFC due to higher cylinder pressures with corresponding gains in BSFC due to the higher cylinder pressures. More specifically, the target cylinder pressure circuit 114 is structured to balance reductions in BSFC due at higher cylinder pressures with gains in BSFC at higher cylinder pressures based on the analyses of each of the mechanical efficiency analysis circuit 108, the closed cycle efficiency analysis circuit 110, and the open cycle efficiency analysis circuit 112.

The cylinder pressure controller 100 is structured to control various engine system parameters to maintain the target cylinder pressure determined by the target cylinder pressure circuit 114. According to various embodiments, the cylinder pressure controller 100 may provide control information (e.g., signals or commands) for one or more of cam position control 128, IVC control 130, SOI control 132, charge flow control 134, and EGR fraction control 136. For example, cam position control 128 may be implemented by a cam phaser in response to the control information from the cylinder pressure controller 100. Cam phasers can adjust the angle of the camshaft relative to the crankshaft, thereby shifting valve timing while maintaining the same form of opening (e.g., lift and duration). IVC control 130 may be implemented via a cam phaser in response to the control information from the cylinder pressure controller 100 or in other ways, such as via a full-authority (e.g., electromechanical) variable valve system. SOI control 132 controls a time at which injection of fuel into the combustion chamber begins. SOI is typically expressed in crank angle degrees relative to TDC of the compression stroke, or degrees after TDC (dATDC). SOI control 132 may be implemented by controlling fuel injector operation.

Charge flow control 134 controls the amount of air that flows into the intake manifold of an engine. Charge flow control 134 may control both fresh air flowand EGR air flow.

Accordingly, charge flow control 134 may be implemented by controlling any one or more of an EGR system, a turbocharger, and a supercharger, depending on the engine system configuration. EGR fraction control 136 refers to controlling a fraction of the total charge flow that is provided by the EGR system.

Some embodiments may also include variable compression ratio systems in addition to or instead of the other control parameters discussed herein (e.g., valve timing) to maintain the target cylinder pressure. For example, in one embodiment, a variable compression ratio system includes a hydraulic actuator that moves an upper section of a piston axially in relation to a fixed lower section. In another embodiment, a variable compression ratio system includes a mechanism to alter the length of the connecting rod.

In one example implementation, depending on the engine operating conditions, a compression ratio between 21 and 25 results in the minimum BSFC for the engine. For that particular engine, SOI may be tuned such that the centroid of heat release occurs at 6-8 degrees ATDC. This configuration results in a part-load cylinder pressure of approximately 220-260 bar.

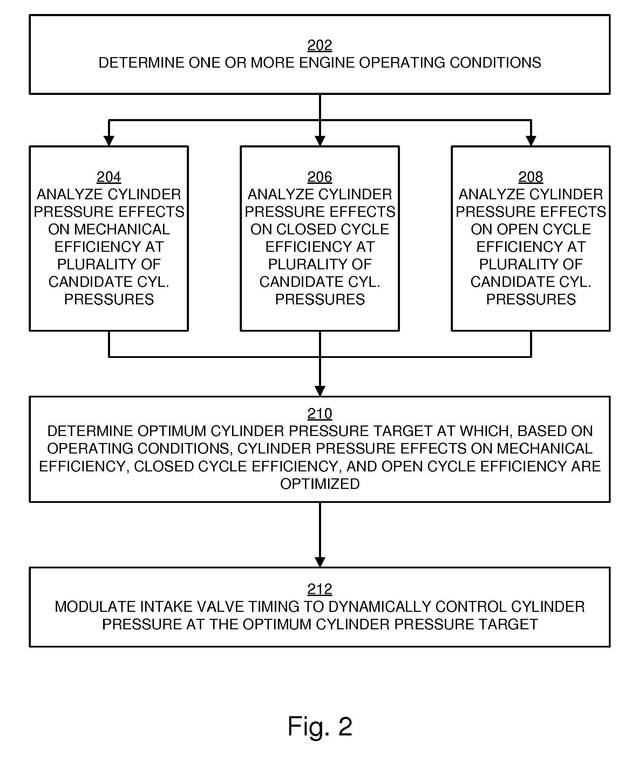

Fig. 2 is a flow diagram of a method 200 of controlling engine cylinder pressure, according to an embodiment. The method 200 may be performed, for example, by the cylinder pressure controller 100 of Fig. 1 or by other control devices.

At 202, one or more engine operating conditions are determined. The engine operating conditions may be determined by the cylinder pressure controller 100 via operative communication with one or more sensors, or via model-based controls. For example, as described above in connection with Fig. 1, the engine operating conditions may include one or more of cylinder pressure 116, cam position 118, IVC 120, SOI 122, charge flow 124, and EGR fraction 126, among other parameters.

At 204, cylinder pressure effects on mechanical efficiency are analyzed. According to an embodiment, the mechanical efficiency analysis circuit 108 (Fig. 1) is structured to analyze the effects of cylinder pressure on the mechanical efficiency of the engine for multiple candidate cylinder pressures, based on the engine operating conditions determined at 202. For example, mechanical efficiency may decrease as cylinder pressure increases due to increased friction between the piston ring and the cylinder wall.

At 206, cylinder pressure effects on closed cycle efficiency are analyzed. According to an embodiment, the closed cycle efficiency analysis circuit 110 (Fig. 1) is structured to analyze the effects of cylinder pressure on closed cycle efficiency for the candidate cylinder pressures, based on the engine operating conditions determined at 202. For example, closed cycle efficiency may vary based on the effective expansion ratio.

At 208, cylinder pressure effects on open cycle efficiency are analyzed. According to an embodiment, the open cycle efficiency analysis circuit 112 (Fig. 1) is structured to analyze the effects of cylinder pressure on open cycle efficiency for the candidate cylinder pressures, based on the engine operating conditions determined at 202. For example, open cycle efficiency may depend on various factors, such as charge flow and EGR fraction.

At 210, an optimum cylinder pressure target is determined at which, based on the operating conditions, the cylinder pressure effects on mechanical efficiency, closed cycle efficiency, and open cycle efficiency, as determined at 204, 206, and 208, respectively, are optimized. In one embodiment, this involves determining BSFC at each of the candidate cylinder pressures, based on the analysis of cylinder pressure effects on each of mechanical efficiency, closed cycle efficiency, and open cycle efficiency performed at 204, 206, and 208, respectively. In other words, the target cylinder pressure circuit 114 (Fig. 1) is structured to balance decreases in BSFC at higher cylinder pressures with increases in BSFC at higher cylinder pressures at each of the plurality of candidate cylinder pressures based on the analyses of each of the mechanical efficiency analysis circuit 108, the closed cycle efficiency analysis circuit 110, and the open cycle efficiency analysis circuit 112 of Fig. 1.

At 212, intake valve timing is modulated so as to dynamically control cylinder pressure at the optimum cylinder pressure target determined at 210. In an embodiment, intake valve timing (e.g., IVC) is modulated via a cam phaser. In some embodiments, one or more of SOI, charge flow, and EGR fraction are controlled in addition to or instead of intake valve timing.

While this specification contains many specific implementation details, these should not be construed as limitations on the scope of what may be claimed, but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

As utilized herein, the term "substantially" and any similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided unless otherwise noted. Accordingly, these terms should be interpreted as indicating that insubstantial or inconsequential modifications or alterations of the subject matter described and claimed are considered to be within the scope of the invention as recited in the appended claims. Additionally, it is noted that limitations in the claims should not be interpreted as constituting "means plus function" limitations under the United States patent laws in the event that the term "means" is not used therein.

The terms "coupled," "connected," and the like as used herein mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another or with the two components or the two components and any additional intermediate components being attached to one another.

It is important to note that the construction and arrangement of the system shown in the various exemplary implementations is illustrative only and not restrictive in character. It should be understood that some features may not be necessary and implementations lacking the various features may be contemplated as within the scope of the application, the scope being defined by the claims that follow. It should be understood that features described in one embodiment could also be incorporated and/or combined with features from another embodiment in manner understood by those of ordinary skill in the art. It should also be noted that the terms "example" and "exemplary" as used herein to describe various embodiments are intended to indicate that such embodiments are possible examples, representations, and/or illustrations of possible embodiments (and such terms are not intended to connote that such embodiments are necessarily extraordinary or superlative examples).

Many of the functional units described in this specification have been labeled as circuits, in order to more particularly emphasize their implementation independence. For example, a circuit may be implemented as a hardware circuit comprising custom very-large-scale integration (VLSI) circuits or gate arrays, off-the-shelf semiconductors such as logic chips, transistors, or other discrete components. A circuit may also be implemented in programmable hardware devices such as field programmable gate arrays, programmable array logic, programmable logic devices or the like.

As mentioned above, circuits may also be implemented in machine-readable medium for execution by various types of processors, such as the processor 104 of Fig. 1. An identified circuit of executable code may, for instance, comprise one or more physical or logical blocks of computer instructions, which may, for instance, be organized as an object, procedure, or function. Nevertheless, the executables of an identified circuit need not be physically located together, but may comprise disparate instructions stored in different locations which, when joined logically together, comprise the circuit and achieve the stated purpose for the circuit. Indeed, a circuit of computer readable program code may be a single instruction, or many instructions, and may even be distributed over several different code segments, among different programs, and across several memory devices. Similarly, operational data may be identified and illustrated herein within circuits, and may be embodied in any suitable form and organized within any suitable type of data structure. The operational data may be collected as a single data set, or may be distributed over different locations including over different storage devices, and may exist, at least partially, merely as electronic signals on a system or network.

The computer readable medium (also referred to herein as machine-readable media or machine-readable content) may be a tangible computer readable storage medium storing the computer readable program code. The computer readable storage medium may be, for example, but not limited to, an electronic, magnetic, optical, electromagnetic, infrared, holographic, micromechanical, or semiconductor system, apparatus, or device, or any suitable combination of the foregoing. As alluded to above, examples of the computer readable storage medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store computer readable program code for use by and/or in connection with an instruction execution system, apparatus, or device.

Computer readable program code for carrying out operations for aspects of the present invention may be written in any combination of one or more programming languages, including an object oriented programming language such as Java, Smalltalk, C++ or the like and conventional procedural programming languages, such as the "C" programming language or similar programming languages.

The program code may also be stored in a computer readable medium that can direct a computer, other programmable data processing apparatus, or other devices to function in a particular manner, such that the instructions stored in the computer readable medium produce an article of manufacture including instructions which implement the function/act specified in the schematic flowchart diagrams and/or schematic block diagrams block or blocks.

## Claims

1. A system, comprising:
an engine; and
a controller in operative communication with the engine, the controller structured to:
determine at least one engine operating condition;
determine, based on the determined at least one engine operating condition, brake-specific fuel consumption for each of a plurality of candidate cylinder pressures;
select a target cylinder pressure from the plurality of candidate cylinder pressures, the target cylinder pressure being the candidate cylinder pressure at which brake-specific fuel consumption is minimized; and
modulate intake valve timing of the engine so as to achieve the target cylinder pressure.

2. The system of claim 1, wherein the controller is structured to modulate the intake valve timing so as to achieve the target cylinder pressure when the engine is operating at partial load.

3. The system of claim 1 or claim 2, wherein determining brake-specific fuel consumption includes analyzing both gains and reductions in brake-specific fuel consumption due to higher cylinder pressures.

4. The system of claim 3, wherein gains in brake-specific fuel consumption due to higher cylinder pressures relate to one or more of the following: decreased mechanical efficiency due to increased piston ring loading against cylinder walls of the engine; decreased closed cycle efficiency due to effective expansion ratio efficiency losses; and/or decreased open cycle efficiency due to volumetric efficiency losses.

5. The system of any preceding claim, wherein the engine operating conditions include at least one of intake valve closing, start of injection charge flow, and exhaust gas recirculation fraction.

6. The system of any preceding claim, wherein the controller is further structured to modulate at least one of intake valve closing, start of injection charge flow, and exhaust gas recirculation fraction so as to achieve the target cylinder pressure.

7. A method, comprising:
determining, by a processor, at least one engine operating condition of an engine;
determining, by the processor based on the determined at least one engine operating condition, brake-specific fuel consumption for each of a plurality of candidate cylinder pressures;
selecting, by the processor, a target cylinder pressure from the plurality of candidate cylinder pressures, the target cylinder pressure being the candidate cylinder pressure at which brake-specific fuel consumption is minimized; and
modulating, by the processor, intake valve timing of the engine so as to achieve the target cylinder pressure.

8. The method of claim 7, wherein the intake valve timing is modulated so as to achieve the target cylinder pressure when the engine is operating at partial load.

9. The method of claim 7 or claim 8, wherein determining brake-specific fuel consumption includes analyzing both gains and reductions in brake-specific fuel consumption due to higher cylinder pressures.

10. The method of claim 9, wherein gains in brake-specific fuel consumption due to higher cylinder pressures relate to one or more of the following: decreased mechanical efficiency due to increased piston ring loading against cylinder walls of the engine decreased closed cycle efficiency due to effective expansion ratio efficiency losses; and/or decreased open cycle efficiency due to volumetric efficiency losses.

11. The method of any one of claims 7 to 10, wherein the engine operating conditions include at least one of intake valve closing, start of injection charge flow, and exhaust gas recirculation fraction.

12. The method of any one of claims 7 to 11, further comprising modulating, by the processor, at least one of intake valve closing, start of injection charge flow, and exhaust gas recirculation fraction so as to achieve the target cylinder pressure.

13. A controller operatively coupled to an engine, the controller comprising:
a mechanical efficiency analysis circuit structured to determine gains in brake-specific fuel consumption for each of a plurality of candidate cylinder pressures due to increased piston ring loading against cylinder walls of the engine;
a closed cycle efficiency analysis circuit structured to determine gains in brake-specific fuel consumption for each of the plurality of candidate cylinder pressures due to effective expansion ratio efficiency losses;
an open cycle efficiency management circuit structured to determine gains in brake-specific fuel consumption for each of the plurality of candidate cylinder pressures due to volumetric efficiency losses; and
a target cylinder pressure circuit structured to determine a target cylinder pressure from the plurality of candidate cylinder pressures, the target cylinder pressure being the candidate cylinder pressure at which brake-specific fuel consumption is minimized,
the controller structured to modulate intake valve timing of the engine so as to achieve the target cylinder pressure.

14. The controller of claim 13, wherein the controller is structured to modulate the intake valve timing so as to achieve the target cylinder pressure when the engine is operating at partial load.

15. The controller of claim 13 or claim 14, wherein determining brake-specific fuel consumption includes analyzing both gains and reductions in brake-specific fuel consumption due to higher cylinder pressures; and/or
wherein the controller is further structured to modulate at least one of intake valve closing, start of injection charge flow, and exhaust gas recirculation fraction so as to achieve the target cylinder pressure.
